# EUROPEAN PATENT SPECIFICATION

(11) **EP 0 289 933 B1**
(45) Date of publication and mention of the grant of the patent: **13.07.1994**
(21) Application number: 88106771.4
(22) Date of filing: 27.04.1988
(51) Int. Cl.: C08F 255/02, C08F 4/34

(54) **Graft polymerization precurser and method manufacturing the same**
Prepolymer für die Pfropfpolymerisation und Herstellungsverfahren
Prépolymère de greffage et sa méthode de préparation

(30) Priority: 30.04.1987 JP 107037/87
(43) Date of publication of application: 09.11.1988
(73) Proprietor: NIPPON OIL AND FATS COMPANY, LIMITED, Chiyoda-ku Tokyo (JP)
(72) Inventor: Moriya, Yasuo, Chita-Gun Aichi-Prefecture (JP); Goto, Hiroshi, Chita-Gun Aichi-Prefecture (JP); Suzuki, Nobuyoshi, Chita-Gun Aichi-Prefecture (JP)
(74) Representative: Grünecker, Kinkeldey, Stockmair & Schwanhäusser Anwaltssozietät

(56) References cited:
- EP-A- 0 206 644
- US-A- 3 642 952
- KOBUNSHI RONBUNSHU, vol. 44, no. 2, 1987, pages 89-95, JP; N. SUZUKI et al.: "Preparations of block and graft copolymers and their applications, III"
- PATENT ABSTRACTS OF JAPAN, vol. 11, no. 150 (C-422)[2597], 15th May 1987; & JP-A-61 285 209 (NIPPON OIL & FATS CO., LTD) 16-12-1986
- PATENT ABSTRACTS OF JAPAN, vol. 12, no. 122 (C-488)[2969], 15th April 1988, page 66 C 488; & JP-A-62 243 645 (NIPPON OIL & FATS CO., LTD) 24-10-1987

## Description

This invention relates to a graft polymerization precursor, which is useful as, for example adhesive, coating agent, quality improver, microdispersion promoter, polymer alloy precurser, functional molding material, agent for providing compatibility to a polymer and which permits a high grafting efficiency to be obtained, as well as to a method for its production.

Heretofore, it has been in practice to mix vinyl polymers, e.g., polystyrene, with propylene polymers as molding material, in order to improve, e.g., the rigidity, dimensional stability and printing properties of the propylene polymers.

As a method of grafting-combining a vinyl polymer with a propylene polymer, there has been proposed a propylene polymer, which is obtained by graft polymerizing a vinyl monomer, e.g., styrene monomer, with a propylene polymer by irradiation with ionizable radiation.

This method provides considerable effects as regards the uniform dispersion of the vinyl copolymer in the propylene polymer.

A further well-known method is the liquid graft polymerization method making use of a solvent such as xylene or toluene. Another known method is the emulsification graft polymerization method.

Further, it has been proposed to impregnate propylene polymer particles with vinyl monomers and cause the polymerization of the resultant system using an aqueous suspension (as disclosed in Japanese Patent Publication Sho 58-53003.) According to this method, in the polymerized resin composition, the vinyl polymer is uniformly mixed. With this method, satisfactory results can be obtained in comparison to other methods.

However, since propylene polymers and vinyl polymers are not satisfactorily compatible to each other, it is not practicable to incorporate more than 10 % by weight of the vinyl copolymer. Usually, the vinyl polymer is incorporated only by 0.2 to 5 % by weight. Even when such a small quantity of vinyl copolymer is mixed, the impact resistance of the mixtures is reduced due to the unsatisfactory mutual compatibility of the two resins, and also the appearance tends to deteriorate.

More specifically, the method of irradiation with ionizable radiant rays is based on a special process of a radiation graft polymerization process.

This method is not economical and it is difficult to put it into practice.

Further, in this method there is a limitation with respect to the amount of vinyl monomers to be introduced.

Further, in the solution graft polymerization process, the polymerization is carried out in a state in which the system to be graft polymerized is diluted with a large quantity of solvent. From the standpoint of the compatibility of the propylene polymer, there is less opportunity of contact of vinyl monomers, polymerization initiators, and propylene polymers with one another, and generally the reaction efficiency of the vinyl monomers is low. Further, complicated after-treatment steps of the vinyl monomers is necessary which is economically disadvantageous. Further, in the emulsified graft polymerization process the reaction is limited only to the on-surface reactions of propylene polymer particles.

In the process of polymerization in a water suspension, the grafting efficiency of the resin composition obtained is low.

Therefore, at the end of the completion of polymerization vinyl polymer particles which have been uniformly dispersed are liable to be aggregated secondarily due to heating in the secondary processing or contact with the solvent, thus giving rise to problems when using the obtained resin composition as a functional molding material and as agents for providing polymer compatibility.

EP-A-0 206 644 discloses a block copolymer obtained by radically copolymerizing a (meth)acrylic acid ester with a radical polymerizable organic peroxide and further copolymerizing a vinyl monomer with said (meth)acrylic ester.

Kobunishi Robunshu, vol. 44, no. 2 (1987) discloses a process for grafting a block copolymer obtained by polymerizing a monomer having a peroxide bond onto polyolefins by kneading or extruding the reaction process conforming to the scheme: 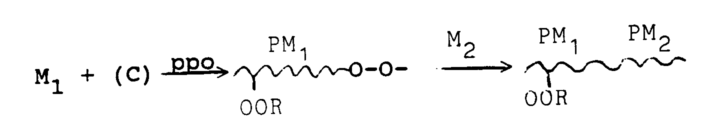
wherein M₁ and M₂ are a first, and a second vinyl monomer, respectively, ppo is a polymeric peroxide and (C) is a radical polymerizable peroxide.

It is the object of the present invention to provide a graft polymerization precursor having an increased grafting efficiency when compared with the prior art propylene polymers and vinyl polymers.

According to the present invention, this object is attained with a graft polymerization precursor obtainable by copolymerizing in the presence of (D) a radical polymerization initiator having a decomposition temperature of 40 to 90°C for obtaining a half reduction period of 10 hours,
(A) in 100 parts by weight of propylene homopolymer,
(B) 5 to 400 parts by weight of one or more vinyl monomers selected from the group consisting of vinyl aromatic monomers, acrylic or methacrylic ester monomers or mixtures thereof, acrylonitrile or methacrylonitrile and vinyl ester monomers and
(C) one or more radical polymerizable organic peroxides represented by the general formula (I) 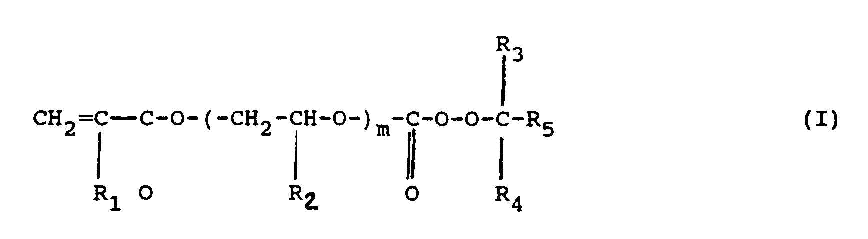 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atoms or a C₃₋₁₂ cycloalkyl group, and m is 1 or 2;
   or represented by the general formula (II) 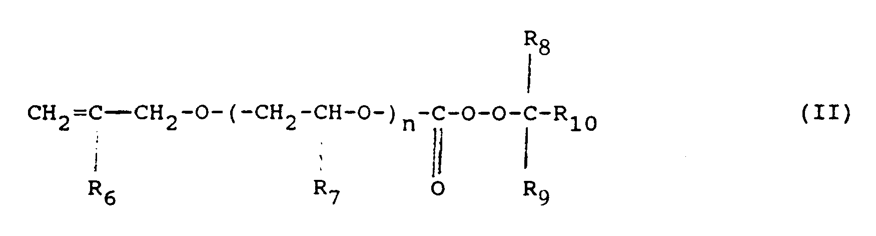 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group containing 1 to 12 carbon atoms or a C₃₋₁₂ cycloalkyl group and n is 0, 1 or 2,
   said component (C) being incorporated in a proportion of 0.1 to 10 parts by weight with respect to 100 parts by weight of said vinyl monomer or monomers (B), said component (D) constituting 0.01 to 5 parts by weight of the sum of said vinyl monomers (B) and said radical polymerizable organic peroxide (C) and said graft polymerization precursor containing 20 to 95% by weight of the propylene homopolymer and 80 to 5% by weight of the vinyl peroxide copolymer containing 0.01 to 0.73% by weight of active oxygen.

According to the invention, there is also provided a method of manufacturing a graft polymerization precursor comprising the steps of:
suspending 100 parts by weight of propylene homopolymer (A) in water,
adding to the resultant suspension a solution obtained by dissolving in 5 to 400 parts by weight of one or more vinyl monomers (B) selected from the group consisting of vinyl acrylic monomers, acrylic or methacrylic ester monomers or mixtures thereof, acrylonitrile or methacrylonitrile and vinyl ester monomers, from 0.1 to 10 parts by weight with respect to 100 parts by weight of said vinyl monomers, of one or more radical polymerizable organic peroxides (C) represented by general formula (I) 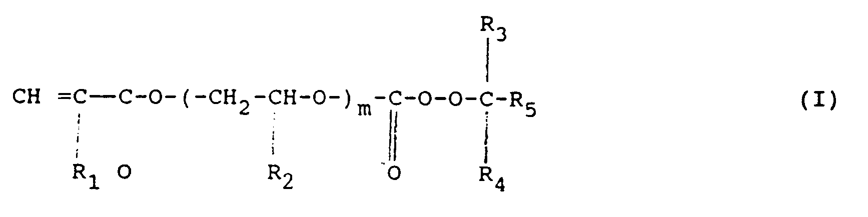
wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atom or a C₃₋₁₂ cycloalkyl group and m is 1 or 2, or represented by general formula (II) 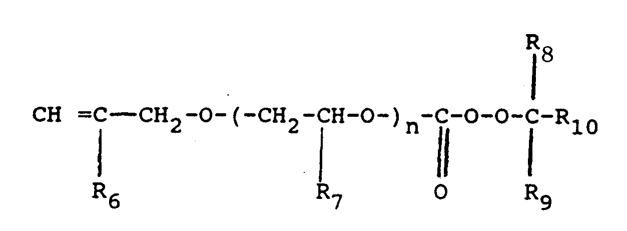
wherein R₆ represents a hydrogen atom or a C₁₋₄ alkyl group, R₇ represents a hydrogen atom or a methyl group, R₅ and R₉ represent C₁₋₄ alkyl groups, R₁₀ represents an alkyl, phenyl or alkyl-substituted phenyl group containing 1 to 12 carbon atoms or a C₃₋₁₂ cycloalkyl group and n is 0, 1 or 2,
and a radical polymerization initiator (D) with a decomposition temperature of 40 to 90°C for obtaining a half reduction period of 10 hours such that it constitutes 0.01 to 5 parts weight of the sum of said vinyl monomers and said radical polymerizable organic peroxide,
heating the resultant mixture to less than the decomposition temperature of said initiator until said propylene homopolymer is impregnated with at least 50% by weight of said vinyl monomers, radical polymerizable organic peroxide and radical polymerization initiator, and
elevating the temperature of the thus obtained aqueous suspension to cause copolymerization of said vinyl monomers and said radical polymerizable organic peroxide in said propylene homopolymer.

The propylene polymer employed in this invention is a propylene homopolymer More specifically the polymer may be, for example, an isotactic polyproplene.

The propylene homopolymer may be in the form of particles or pellets with diameters randing from 0.1 to 5 mm . These shapes are suitably selected according to the proportion of propylene polymer used.

If the diameter is excessively large, not only is the dispersion difficult at the time of the polymerization, but also is the period of impregnation of the vinyl monomer, for instance, extended.

Specific examples of the vinyl monomer according to the invention are vinyl aromatic monomers, e.g., styrene, nucleus substituted styrene, e.g., methyl styrene, dimethyl styrene, ethyl styrene, isopropyl styrene and chloro-substituted styrene, α-substituted styrenes, e.g., and α-methyl styrene, (metha-and/or) acrylic ester monomers, e.g., alkyl esters with a carbon number of 1 to 7 of (metha-and/or) acrylic acid, (metha-and/or) acrylonitrile, and vinyl ester monomers, e.g., vinyl propionate and vinyl acetate.

Further, it is possible to use, for example, halogenated vinyl and vinylidene (particularly, vinyl chloride and vinylidene chloride), vinyl naphthalene, vinyl carbazole, acrylamide, methacrylamide and maleic anhydride. These components may be used either alone or in combination.

Of these compounds, vinyl aromatic monomers and (metha-and/or) acrylic ester monomers are preferred.

Preferably, 50% or more by weight of the vinyl monomers consists of vinyl aromatic monomers, (meth)acrylic ester monomers, or mixtures of the latter.

Particularly, hydrophilic or solid vinyl monomers are suitably dissolved in monomers soluble with respect to oil when they are used.

The vinyl monomers are incorporated in an amount of 5 to 400 parts by weight, preferably 10 to 200 parts by weight, with respect to 100 parts by weight of propylene polymer.

If the amount is less than 5 parts by weight, a sufficient performance as graft is difficult to obtain in spite of the fact that the graft after the grafting reaction has a high grafting efficiency.

When the amount exceeds 400 parts by weight, the proportion of the vinyl monomers, radical (co-and/or) polymerizable organic peroxide represented by the formulae I and II and radical polymerization initiator that is not impregnating the propylene polymer is liable to exceed 50 % by weight, thus increasing the amount of free vinyl monomers in the system.

According to Japanese Patent Publication Sho 58-53003, it is taught that in the water suspension polymerization process it is necessary that free vinyl monomers are present in an amount of less that 20 % by weight.

According to the invention, however, the graft polymerization precursor has a peroxide group in its vinyl polymer molecule and has a grafting function. Therefore, a sufficiently excellent grafting function can be obtained even if the sum of free vinyl monomers, radical polymerizable organic peroxide represented by the formulae I or II is above 20 % by weight, as long as its content is less than 50 % by weight. The radical polymerizable organic peroxide which is used in accordance with the invention, is represented by the formulae I or II. Specific examples of the compound represented by the formula I are t-butylperoxyacryloyloxyethyl carbonate, t-amylperoxyacryloyloxyethyl carbonate, t-hexylperoxyacryloyloxyethyl carbonate, 1, 1, 3, 3-tetramethylethylbutylperoxyacryloyloxyethyl carbonate, cumylperoxyacryloyloxyethyl carbonate, p-isopropylcumylperoxyacryloyloxyethyl carbonate, t-butylperoxymethacryloyloxyethyl carbonate, t-amylperoxymethacryloyloxyethyl carbonate, t-amylperoxymechacryloyloxyethyl carbonate, t-hexylperoxymethacryloyloxyethyl carbonate, 1, 1, 3, 3-tetramethylbutylperoxymethacryloyloxyethyl carbonate, cumylperoxymethacryloyloxyethyl carbonate, p-isopropylcumylperoxymethacryloyloxyethyl carbonate, t-butylperoxyacryloyloxyethoxyethyl carbonate, t-amylperoxyacryloyloxyethoxyethyl carbonate, t-hexylperoxyacryloyloxyethoxyethyl carbonate, 1, 1, 3, 3-tetramethylbutylperoxyacryloyloxyethoxyethyl carbonate, cumylperoxyacryloyloxyethoxyethyl carbonate, p-isopropylcumylperoxyacryloyloxyethoxyethyl carbonate, t-butylperoxymethacryloyloxyethoxyethyl carbonate, t-amylperoxymethacryloyloxyethoxyethyl carbonate, t-hexylperoxymethacryloyloxyethoxyethyl carbonate, 1, 1, 3, 3-tetramethylbutylperoxymethacryloyloxyethoxyethyl carbonate, cumylperoxymethacryloyloxyethoxyethyl carbonate, p-isopropylcumylperoxymethacryloyloxyethoxyethyl carbonate, t-butylperoxyacryloyloxyisopropyl carbonate, t-amylperoxyacryloyloxyisopropyl carbonate, t-hexylperoxyacryloyloxyisopropyl carbonate, 1, 1, 3, 3-tetramethylbutylperoxyacryloyloxyisopropyl carbonate, cumylperoxyacryloyloxyisopropyl carbonate, p-isopropylcumylperoxyacryloyloxyisopropyl carbonate, t-butylperoxymethacryloyloxyisopropyl carbonate, t-amylperoxymethacryloyloxyisopropyl carbonate, t-hexylperoxymethacryloyloxyisopropyl carbonate, 1, 1, 3, 3-tetramethylbutylperoxymethacryloyloxyisopropyl carbonate, 1, 1, 3, 3-tetramethylbutylperoxymethacryloyloxyisopropyl carbonate, cumylperoxymethacryloyloxyisopropyl carbonate, p-isopropylcumylperoxymethacryloyloxyisopropyl carbonate. Specific examples of the compound represented by the formula II are t-butylperoxyallyl carbonate, t-hexylperoxyallyl carbonate, 1, 1, 3, 3-tetramethylbutylperoxyallyl carbonate, p-methylperoxyallyl carbonate, t-butylperoxymethallyl carbonate, t-amylperoxymethallyl carbonate, t-hexylperoxymethallyl carbonate, 1, 1, 3, 3-tetramethylbutylperoxymethallyl carbonate, p-methylperoxymethallyl carbonate, cumylperoxymethacryl carbonate, t-amylperoxyallyloxyethyl carbonate, t-hexylperoxyacryloxyethyl carbonate, t-butylperoxymethallyloxyethyl carbonate, t-amylperoxymethallyloxyethyl carbonate, t-hexylperoxymethallyloxyethyl carbonate, t-butylperoxyallyloxyisopropyl carbonate, t-amylperoxyallyloxyisopropyl carbonate, t-hexylperoxyallyloxyisopropoyl carbonate, t-butylperoxymethacryloxyisopropyl carbonate, t-amylperoxymethallyloxyisopropyl carbonate and t-hexylperoxymethallyloxyisopropyl carbonate.

Of these compounds, t-butylperoxyacryloyloxy ethyl carbonate, t-butylperoxymethacryloyloxyethyl carbonate, t-butylperoxyallyl carbonate and t-butylperoxymethallyl carbonate are preferred. The radical polymerizable organic peroxide is incorporated in an amount of 0.1 to 10 parts by weight with respect to 100 parts by weight of vinyl monomers. When the proportion is less than 0.1 parts by weight, the amount of active oxygen in the graft polymerization precursor according to the invention is insufficient, so that it is difficult to display a sufficient grafting function. When the amount exceeds 10 parts by weight, the radical polymerizable organic peroxide is inductively decomposed during the polymerization, so that a large amount of gel is generated in the graft polymerization precursor at the instant of the end of the grafting reaction. Further, although the grafting capacity of the graft polymerization precursor is increased, the gel formation capacity is also increased, which is undesirable. With the radical polymerization initiator which is used according to the invention, the decomposition temperature for obtaining a half reduction period of 10 h (hereinafter referred to as 10-h half reduction period) is 40 to 90°C, preferably 50 to 75°C. The polymerization according to the invention, has to be carried out under a condition that the radical polymerizable organic peroxide is not decomposed at all. Meanwhile, the 10 h half reduction period temperature for the radical polymerizable organic peroxide is 90 to 110°C and the polymerization temperature should be less than 110°C. If the 10-h half reduction period temperature of the radical polymerization initiator exceeds 90°C, the polymerization temperature is increased, so that the radical polymerizable organic peroxide is decomposed during the polymerization. If the 10-h half reduction period is less than 40°C, the polymerization is initiated during the process of impregnating the propylene polymer with vinyl monomers. The term "10-h half reduction period temperature", refers to a temperature, at which the polymerization initiator is decomposed by 50 % when 10 h have passed at a certain temperature after the addition of 0.1 mol of the polymerization initiator to 1ℓ of benzene. Specific examples of such radical polymerization initiators are di-isopropylperoxy dicarbonate (40.5°C), di-n-propylperoxy dicarbonate (40.5°C), dimyristylperoxy dicarbonate (40.9°C), di-(2-ethyoxyethyl) peroxy dicarbonate (43.4°C), di(methoxyisopropyl) peroxy dicarbonate (43.5°C), di(2-ethylhexyl) peroxy dicarbonate (43.5°C), t-hexylperoxyneodecanoate (44.7°C), di(3-methyl-3-methoxybutyl) peroxy dicarbonate (46.5°C), t-butylperoxyneodecanoate (46.50°C), t-hexylperoxyneohexanoate (51.3°C), t-butylperoxyneohexanoate (53°C), 2, 4-dichlorobenzoyl peroxide (53°C), t-hexylperoxypivalate (53.2°C) t-butylperoxypivalate (55°C), 3, 5, 5-trimethylhexanoyl peroxide (59.5°C), octanoyl peroxide (62°C), lauroyl peroxide (62°C), cumylperoxy octoate (65.1°C), acetyl peroxide (68°C), t-butylperoxy-2-ethylhexanoate (72.5°C), m-toluoyl peroxide (73°C), benzoyl peroxide (74°C), t-butylperoxy isobutylate (78°C), 1, 1-bis (t-butylperoxy) -3, 5, 5-triethyl-cyclohexane (90°C). (The Figures in parentheses represent 10-h half reduction period temperatures)

The radical polymerization initiator is used in an amount of 0.01 to 5 parts by weight, preferably 0.1 to 2.5 parts by weight, with respect to 100 parts by weight of the sum of vinyl monomer and radical polymerizable organic peroxide. If the amount used is less than 0.01 parts by weight, a perfect polymerization of the vinyl monomers and radical polymerizable organic peroxide cannot be obtained. If the amount exceeds 5 % by weight, crosslinking of the propylene polymers tends to occur during the polymerization as well as an induced decomposition of the radical polymerizable organic peroxide.

According to the invention, the polymerization is carried out by the usual aqueous suspension polymerization process with the propylene homopolymer and a solution prepared separately by agitatedly dispersing the radical polymerization initiator and the radical polymerizable organic peroxide in the vinyl monomer in water in the presence of a suspension agent used for aqueous suspension polymerization, e.g., a water-soluble polymer such as polyvinyl alcohol, polyvinyl pyrrolidone and methyl cellulose and aqueous-insoluble inorganic compounds such as calcium phosphate and magnesium oxide.

The concentration of the aqueous suspension may be set as desired. Usually, however, the proportion of the reaction components is 5 to 150 parts by weight with respect to 100 parts by weight of water.

According to the invention, the impregnation of propylene homopolymer with the solution noted above is suitably carried out at an as high as possible temperature. However, when the polymerization commences with the decomposition of the radical polymerization initiator at the time of the impregnation, the composition of the graft polymerization precurser that is formed becomes very heterogeneous. Therefore, the impregnation is usually suitably carried out at a temperature 5°C or more lower than the 10-h half reduction period temperature of the radical polymerization initiator used. The sum of free vinyl monomers, radical polymerizable organic peroxide and radical polymerization initiator after the impregnation should be less than 50 % by weight, preferably less than 20 % by weight, with respect to their initial amounts used. If the sum exceeds 50 % by weight, the grafting capacity of the graft polymerization precursor according to the invention is extremely reduced. The amount of free vinyl monomers radical polymerizable organic peroxide and radical polymerization initiator is calculated by sampling a given quantity of aqueous suspension, quickly filtering the sampled liquid using a metal filter of about 0.04 mm (300 mesh) to separate the propylene homopolymer and liquid phase and measuring the quantities of vinyl monomers, radical polymerizable organic peroxide and radical polymerization initiator in the liquid phase.

According to the invention, the polymerization is usually carried out at a temperature of 30 to 110°C in order to prevent the decomposition of the radical polymerizable organic peroxide during the polymerization.

If the temperature exceeded 110°C, the degree of decomposition of the radical polymerizable organic peroxide that is decomposed would be increased, which is undesirable. The polymerization period is usually suitably 2 to 20 h.

In the graft polymerization precursor according to the invention, the vinyl peroxide copolymer contains 0.01 to 0.73 % by weight of active oxygen.

If the content of active oxygen was less than 0.01 % by weight, the grafting capacity of the graft polymerization precursor would be extremely reduced.

If the content exceeded 0.73 % by weight, a molecular decomposition of the graft polymerization precursor would occur and the gel formation capacity would be increased, which is also undesirable.

The active oxygen content can be calculated by extracting the vinyl polymer from the graft polymerization precursor according to the invention by solvent extraction and obtaining the active oxygen content of the vinyl polymer by the iodometric method.

The graft polymerization precursor according to the invention can be grafted by merely heating it. For example, a resin composition having a high grafting efficiency can be obtained by causing melt mixing using, for instance, an extruder or a mixer.

The graft polymerization precursor permits the preparation of a resin composition having a high grafting efficiency by mere heating.

It is thus thought that in the resin composition obtained by the heating process the aggregation of vinyl monomers due to the secondary processing is reduced compared to a composition obtained by the prior art aqueous suspension polymerisation, and it is expected that a high effect is obtainable as a compatibilizer between polymers.

Further, the method of manufacturing a graft polymerization precursor according to the invention is an aqueous suspension polymerization process. Therefore, it is possible to readily manufacture a large amount of graft polymerization precursor without the need of any particular apparatus.

Further, it is possible to introduce a large quantity of vinyl polymer compared to the prior art manufacture method.

### Examples and Comparative Examples

The invention will now be described in further detail in conjunction with the examples.

### [Example 1]

2,500 g of pure water were charged into a stainless steel autoclave with a volume of 5 l and 2.5 g of polyvinyl alcohol were dissolved as a suspension agent.

Further, 700 g of propylene polymer (available under the trade name "Sumitomonoburen", by Sumitomo Chemical Co., Ltd., pellet-like) were charged and dispersed by agitation. Separately, 1.5 g of benzoyl peroxide (available under the trade name "Nyper-B" by Nippon Oil and Fats Co., Ltd., with a 10-h half reduction period temperature of 74°C) as radical polymerization initiator and 6 g of t-butylperoxymethacryloyloxyethyl carbonate as radical polymerizable organic peroxide were dissolved in 300 g of vinyl monomer, and the resultant solution was charged into the autoclave, and the resultant solution was agitated.

Then, the autoclave was heated to elevate its temperature to 60 to 65°C, and the system was agitated for 2h whereby the propylene polymer was impregnated with the vinyl monomer containing the radical polymerization initiator and radical polymerizable organic peroxide. Subsequently, after confirming that the content of free vinyl monomer, radical polymerizable organic peroxide and radical polymerization initiator was less than 50 % by weight of the initial amount, the temperature was elevated to 80 to 85°C, and the system was held at this temperature for 7 h to complete polymerization, followed by washing with water and drying to obtain a graft polymerization precursor.

This graft polymerization precursor was rendered into a film using a press, and the styrene copolymer content of 28.5 % by weight was calculated from the characteristic of polystyrene infrared absorption spectrum of 1,603 cm⁻¹.

Further, extraction from this graft polymerization precursor was carried out at room temperature for 7 days using ethyl acetate to obtain a styrene solution, which was charged into methanol to obtain a white powdery styrene polymer.

The active oxygen content in this styrene polymer was measured by the iodometry method, and it was 0.13 % by weight.
This graft polymerization precursor was subjected to extraction in a Soxhlet extractor with xylene.
No xylene remaining undissolved was found.

### [Reference Example 1]

The graft polymerization precursor obtained in Example 1 was kneaded at 180°C for 10 min using a laboratory plastmill "B-75 Type Mixer" for a grafting reaction.

After the grafting reaction, the resultant system was subjected to extraction in a Soxhlet extractor with ethyl acetate to extract non-grafted styrene polymer.

The extracted non-grafted styrene polymer was 9.8 % by weight with respect to the total amount.

Thus, the grafting efficiency of the styrene polymer was calculated to be 67.3 % by weight.

Further, in the extraction with xylene, the insoluble part in xylene was 10.3 % by weight.

### [Comparative Example 1]

A graft polymerization precursor was prepared in the same manner as Example 1 except for that t-butylperoxymethacryloyroxyethyl carbonate was not used.

With this graft polymerization precursor , the contents of styrene polymer, active oxygen and insoluble part in xylene were measured in the same manner as in Example 1. They were respectively 28.3, 0 and 0 % by weight.

The grafting efficiency of this graft polymerization precursor was obtained by causing a grafting reaction in the manner as in Reference Example 1.

It was 0 % by weight, that is, this graft polymerization precursor had entirely no grafting capacity.

### [Comparative Example 2]

A graft polymerization precursor was prepared in the same manner as in Example 1 except for that dicumylperoxide was used in lieu of t-butylperoxymethacryloyloxyethyl carbonate.

In this case, the contents of styrene polymer, active oxygen and insoluble part in xylene were respectively 28.3, 0.02 and 0 % by weight.

The active oxygen content of 0.02 % by weight is thought to be due to the fact that dicumylperoxide extracted with ethyl acetate was dissolved in the methanol/ethyl acetate solvent as reprecipitation solvent and distributed into the propylene polymer during the polymerization.

This graft polymerization precursor was analyzed in the same manner as in Reference Example 1 to find that the grafting efficiency with respect to the propylene polymer and styrene polymer was 0.9 % by weight. It was thought that substantially no dicumylperoxide occurred.

Further, the content of the insoluble part in xylene was 0.7 % by weight.

### [Example 2]

A graft polymerization precursor was prepared in the same manner as in Example 1 except for that 300 g of methyl methacrylate were used in lieu of 300 g of styrene.

This graft polymerization precursor was analyzed in the same manner as in Example 1 to find that the methyl methacrylate polymer content was 25.7 % by weight (the determination based on the infrared absorption spectrum at 1,720 to 1,730 cm⁻¹), the active oxygen content was 0.12 % by weight and the insoluble part in xylene content was 0 % by weight.

### [Reference Example 2]

The graft polymerization precursor obtained in Example 2 was grafted in the same manner as in Reference Example 1.

The grafting efficiency was 51.5 % by weight.

### [Comparative Example 3]

2,500 g of pure water were charged into a stainless steel autoclave with a volume of 5 l, and 2.5 g of polyvinyl alcohol were dissolved as suspension agent. To the resultant system a mixture consisting of 1,000 g of styrene, 5 g of benzoyl peroxide and 20 g of t-butylperoxymethacryloyloxyethyl carbonate was added.

The admixture was subjected to polymerization at 80 to 85 °C for 7 h to obtain a peroxide-group-containing styrene polymer composition.

5 g of the peroxide-group-containing styrene polymer composition were dissolved in benzene.

The resultant solution was then charged into methanol to remove any non-copolymerized peroxide, thus obtaining a peroxide-group-containing styrene polymer. As a result, substantially the same styrene polymer as in the case of Example with an active oxygene of 0.13 % by weight was obtained.

Then, 70 parts by weight of the propylene polymer used in Example 1 and 30 % by weight of the peroxy-group-containing styrene polymer were mixed together for a grafting reaction in the same manner as in reference Example 1. The grafting efficiency was 0 % by weight.

The insoluble part content in xylene was 7.2 % by weight.

The insoluble part in xylene content occurred due to the inter-molecular bridging of the styrene copolymer.

In other words, in this case no grafting reaction occurred, but only an inter molecular crosslinking reaction of the styrene polymer occurred.

### [Example 3]

A graft polymerization precursor was prepared in the same manner as in Example 1 except that 300 g of vinyl acetate were used in lieu of 300 g of styrene and 6 g of t-butylperoxyallyl carbonate were used in lieu of 6 g of t-butylperoxymethacryloyloxyethyl carbonate.

This graft polymerization precursor was rendered into a film using a press, and the polyvinyl acetate content was determined from the carbonyl infrared absorption spectrum at 1,720 to 1,730 cm⁻¹. It was 28 % by weight.

This graft polymerization precursor was subjected to extraction at room temperature for 7 days with methanol to extract polyvinyl acetate. The system was further charged into petroleum ether to obtain a polyvinyl acetate powder. The active oxygen content of polyvinyl acetate was 0.16 % by weight, the insoluble part content in xylene in the graft polymerization precursor was 1.7 % by weight.

### [Reference Example 3]

Grafting reaction was caused in the same manner as in Reference Example 1 except that the compound obtained in Example 3 was used in lieu of the graft polymerization precursor and that methanol was used in lieu of ethyl acetate as extraction solvent for calculating the grafting efficiency. As a result, the grafting efficiency was 56.7 % by weight.

### [Example 4]

A graft polymerization precursor was obtained in the same manner as in Example 1 except that 255 g of styrene and 75 g of acrylonitrile were used as vinyl monomer. The composition of the graft polymerization precursor contained 27.8 % by weight of vinyl copolymer as determined form the yield at the time of the completion of polymerization (the yield being based on the product in the form of pearl, excluding the product in the powdery form, which consisted of vinyl copolymers only). The content of active oxygen in the vinyl copolymer as measured in the manner as in Example 1 was 0.14 % by weight. The insoluble part in xylene content was 0.8 % by weight.

### [Reference Example 4]

Grafting reaction was caused in the same manner as in Reference Example 1 except that the product obtained in Example 4 was used as graft polymerization precursor. The grafting efficiency was 61.2 % by weight.

### [Example 5]

A graft polymerization precursor was obtained in the same manner as in Example 1 except that lauroyl peroxide (available under the trade name "Perroyl L" manufactured by Nippon Oil & Fats Co., Ltd. with a 10-h half reduction period temperature of 62°C) was used in lieu of benzoyl peroxide as radical polymerization initiator and that the polymerization temperature and time were correspondingly set 70 to 75°C and 9 h, respectively.

This graft polymerization precursor had a composition containing 27.9 % by weight of styrene polymer, 0.12 % by weight of active oxygen content in the styrene polymer and 0 % by weight of insoluble part in xylene.

### [Comparative Example 4]

A graft polymerization precursor was obtained in the same manner as in Example 1 except that t-butylperoxybenzoate (available under the trade name "Perbutyl Z" manufactured by Nippon Oil and Fats Co., Ltd. with a 10-h half reduction period temperature of 104°C ) was used in lieu of benzoyl peroxide as the radical polymerization initiator and that the polymerization temperature and time were correspondingly set to be 120°C and 6 h, respectively.

This graft polymerization precursor contained 97 % by weight of insoluble part in xylene. This is thought to be due to the presumable decomposition of t-butylperoxymethacryloyloxyethyl carbonate, giving rise to intermolecular crosslinking.

### [Examples 6 to 9]

Graft polymerization precursors were prepared using a propylene polymer, styrene, benzoyl peroxide, t-butylperoxymethacryloyloxyethyl carbonate in the quantities as listed in Table 1.

These graft polymerization precursors were subjected to grafting reactions in the same manner as in Reference Example 1, and the grafting efficiency and insoluble part in xylene content of the resultant grafted systems were measured. The results are shown in Table 1.

### [Comparative Examples 5 to 8]

Graft polymerization precursors were manufactured by using a propylene polymer, styrene, benzoyl peroxide and t-butylperoxymethacryloyloxyethyl carbonate as in Example 1 in the quantities as shown in Table 2.

Further, these graft polymerization precursors were subjected to grafting reactions in the same manner as in Reference Example 1, and the grafting efficiency and insoluble part content in xylene of the resultant grafted systems were measured.

The results are shown in Table 2.

### [Comparative Example 9]

A graft polymerization precursor was prepared in the same manner as shown in Example 1 except that cumyl-peroxyneodecanoate (available under the trade name "Percumyl ND" manufactured by Nippon Oil & Fats Co., Ltd. with a 10-h half reduction period temperature of 36.6°C) was used in lieu of benzoyl peroxide as radical polymerisation initiator and that the impregnation temperature and time were set to 35°C and 2 h, respectively, and the polymerization temperature was set to 60°C.

This graft polymerization precursor was covered by a transparent resin, and the powdery product, consisting of the styrene polymer only, reached an amount of 63 % by weight of the charged amount of styrene.

This graft polymerization precursor was subjected to a grafting reaction in the same manner as in Reference Example 1.

The grafting efficiency was 5 % by weight.

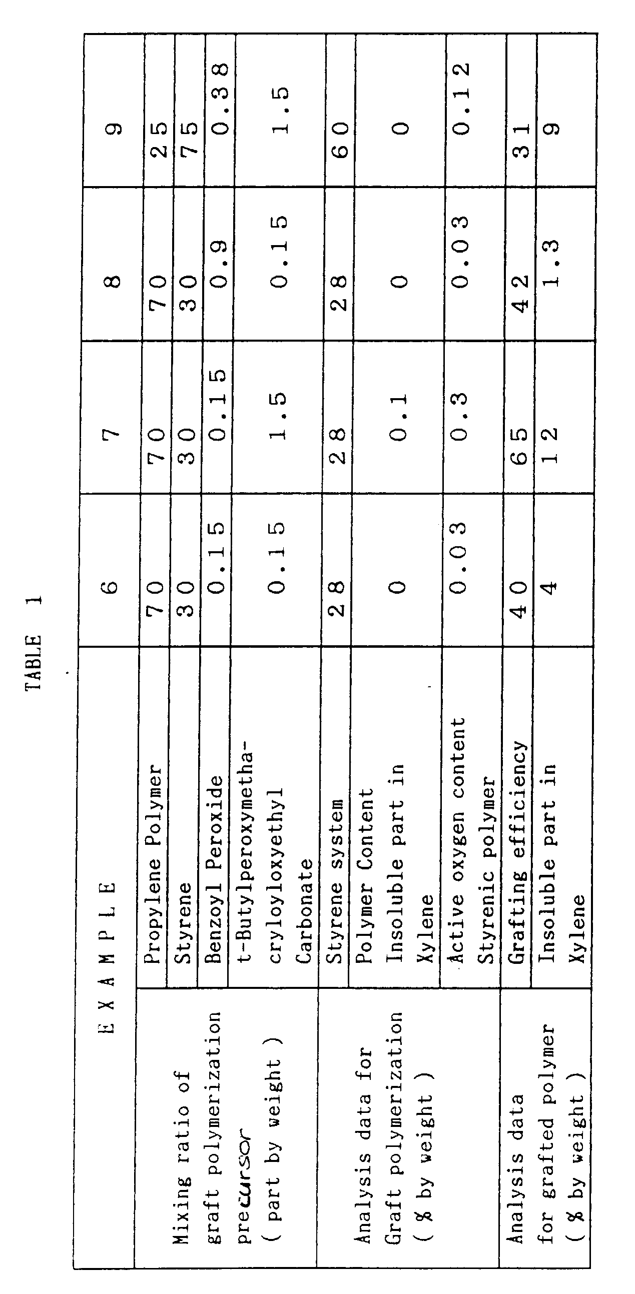

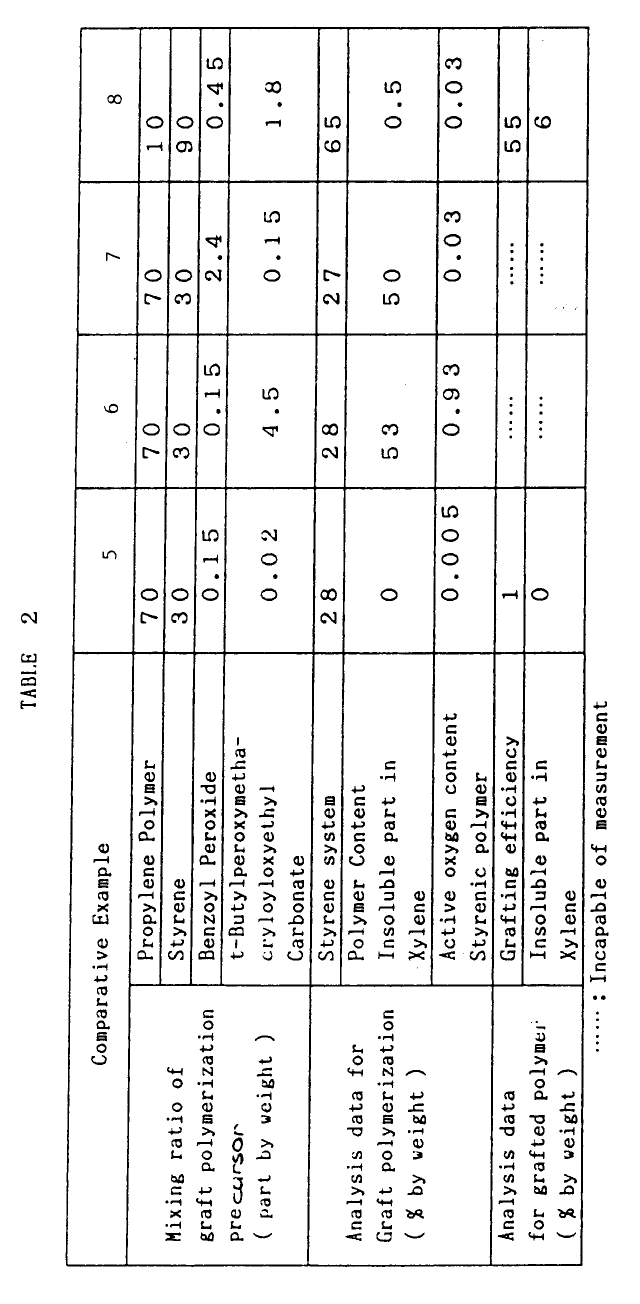

## Claims

1. A graft polymerization precursor obtainable by copolymerizing in the presence of (D) a radical polymerization initiator having a decomposition temperature of 40 to 90°C for obtaining a half reduction period of 10 hours, in
(A) 100 parts by weight of propylene homopolymer,
(B) 5 to 400 parts by weight of one or more vinyl monomers selected from the group consisting of vinyl aromatic monomers, acrylic or methacrylic ester monomers or mixtures thereof, acrylonitrile or methacrylonitrile and vinyl ester monomers and
(C) one or more radical polymerizable organic peroxides represented by the general formula (I) 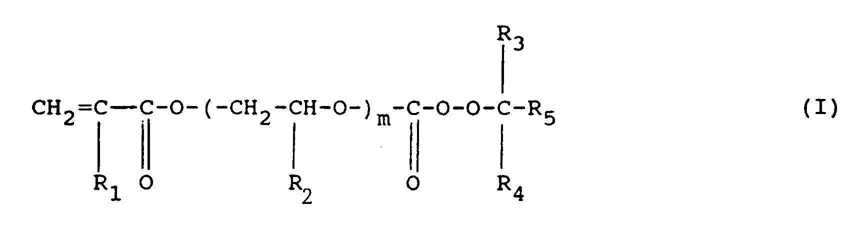 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atoms or a C₃₋₁₂ cycloalkyl group, and m is 1 or 2; or represented by the general formula (II) 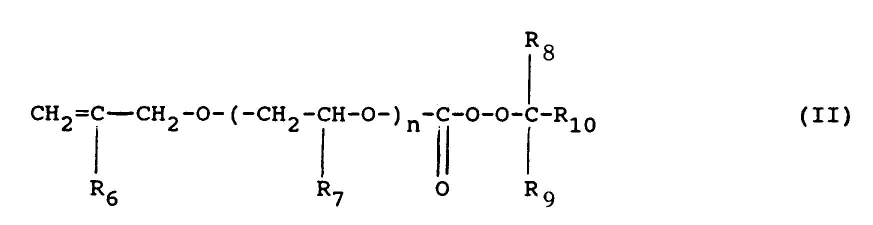 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group containing 1 to 12 carbon atoms or a C₃₋₁₂ cycloalkyl group and n is 0, 1 or 2,
said component (C) being incorporated in a proportion of 0.1 to 10 parts by weight with respect to 100 parts by weight of said vinyl monomer or monomers (B), said component (D) constituting 0.01 to 5 parts by weight of the sum of said vinyl monomers (B) and said radical polymerizable organic peroxide (C) and said graft polymerization precursor containing 20 to 95% by weight of the propylene homopolymer (A) and 80 to 5% by weight of the vinyl peroxide copolymer containing 0.01 to 0.73% by weight of active oxygen.

2. The graft polymerization precursor according to claim 1 wherein 50 or more % by weight of vinyl monomers polymerized in said propylene homopolymer consist of vinyl aromatic monomers.

3. The graft polymerization precursor according to claim 1 wherein 50 or more % by weight of vinyl monomers polymerized in said propylene homopolymer consist of acrylic or methacrylic ester monomers or mixtures thereof.

4. A method of manufacturing a graft polymerization precursor according to claim 1 comprising the steps of:
suspending 100 parts by weight of propylene homopolymer (A) in water,
adding to the resultant suspension a solution obtained by dissolving in 5 to 400 parts by weight of one or more vinyl monomers (B) selected from the group consisting of vinyl aromatic monomers, acrylic or methacrylic ester monomers or mixtures thereof, acrylonitrile or methacrylonitrile and vinyl ester monomers, from 0.1 to 10 parts by weight with respect to 100 parts by weight of said vinyl monomers (B), of one or more radical polymerizable organic peroxides (C) represented by general formula (I) 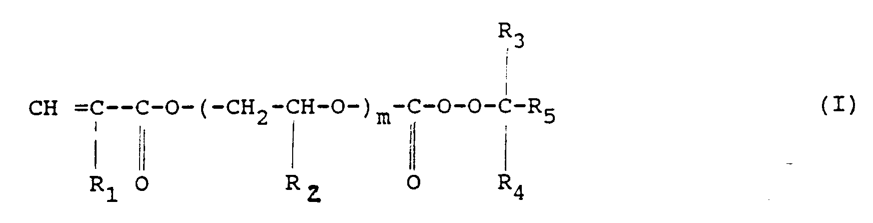 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atom or a C₃₋₁₂ cycloalkyl group and m is 1 or 2, or represented by general formula (II) 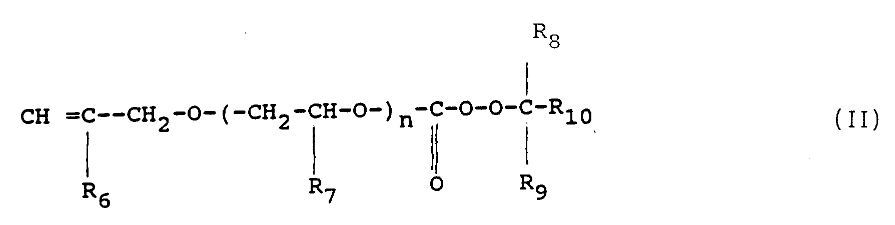 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group containing 1 to 12 carbon atoms or a C₃₋₁₂ cycloalkyl group and n is 0, 1 or 2,
and a radical polymerization initiator (D) with a decomposition temperature of 40 to 90°C for obtaining a half reduction period of 10 hours such that it constitutes 0.01 to 5 parts by weight of the sum of said vinyl monomers (B) and said radical polymerizable organic peroxide (C),
heating the resultant mixture to less than the decomposition temperature of said initiator (D) until said propylene homopolymer (A) is impregnated with at least 50% by weight of said vinyl monomers (B), radical polymerizable organic peroxide (C) and radical polymerization initiator (D), and
elevating the temperature of the thus obtained aqueous suspension to cause copolymerization of said vinyl monomers (B) and said radical polymerizable organic peroxide (C) in said propylene homopolymer (A).

5. The method of claim 4, wherein 50 or more % by weight of the vinyl monomers to be polymerized in said propylene homopolymer consist of vinyl aromatic monomers.

6. The method of claim 4, wherein 50 or more % by weight of the vinyl monomers polymerized in said propylene homopolymer consist of acrylic or methacrylic ester monomers or mixtures thereof.

## Patentansprüche

1. Pfropfpolymerisationsvorläufer, erhältlich durch Copolimerisieren von
(B) 5 bis 400 Gewichtsteilen eines oder mehrerer Vinylmonomere, ausgewählt aus der Gruppe, bestehend aus aromatischen Vinylmonomeren, Acryl- oder Methacrylestermonomeren oder Gemischen daraus, Acrylonitril- oder Methacrylonitril und Vinylestermonomeren, und
(C) eines oder mehrerer radikal polimerisierbarer, organischer Peroxide, dargestellt durch die allgemeine Formel (I) 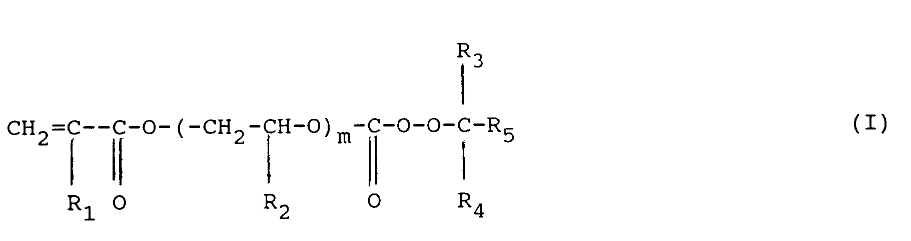 worin R₁ ein Wasserstoffatom oder eine C₁₋₂-Alkylgruppe darstellt, R₂ ein Wasserstoffatom oder eine Methylgruppe darstellt, R₃ und R₄ C₁₋₄-Alkylgruppen darstellen, R₅ eine Alkyl-, Phenyl- oder alkylsubstituierte Phenylgruppe, enthaltend 1 bis 12 Kohlenstoffatome, oder eine C₃₋₁₂-Cycloalkylgruppe darstellt, und m 1 oder 2 ist;
oder dargestellt durch die allgemeine Formel (II) 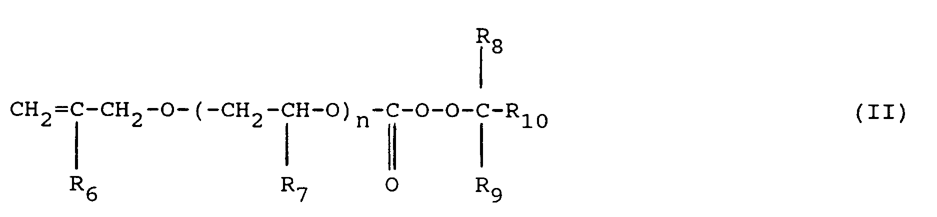 worin R₆ ein Wasserstoffatom oder eine C₁₋₄-Alkylgruppe darstellt, R₇ ein Wasserstoffatom oder eine Methylgruppe darstellt, R₈ und R₉ C₁₋₄-Alkylgruppen darstellen, R₁₀ eine Alkyl-, Phenyl- oder alkylsubstituierte Phenylgruppe, enthaltend 1 bis 12 Kohlenstoffatome, oder eine c₃₋₁₂-Cycloalkylgruppe darstellt, und n 1 oder 2 ist,
in (A) 100 Gewichtsteilen Propylenhomopolymer
in Anwesenheit (D) eines Radikalpolymerisationsinitiators mit einer Zersetzungstemperatur von 40 bis 90°C, um eine Halbwertsreduktionszeit von 10 Stunden zu erhalten, wobei der Bestandteil (C) in einer Menge von 0,1 bis 10 Gewichtsprozent, bezogen auf 100 Gewichtsteile des Vinylmonomers bzw. der Vinylmonomere (B), beigemengt wird, der Bestandteil (D) 0,01 bis 5 Gewichtsteile der Summe der Vinylmonomere (B) und des radikalpolymerisierbaren, organischen Peroxids (C) ausmacht, und der Pfropfpolymerisationsvorläufer 20 bis 95 Gewichtsprozent des Propylenhomopolymers (A) und 80 bis 5 Gewichtsprozent des Vinyl/Peroxid-Copolymers, enthaltend 0,01 bis 0,73 Gewichtsprozent aktiven Sauerstoff, enthält.

2. Pfropfpolymerisationsvorläufer nach Anspruch 1, wobei 50 oder mehr Gewichtsprozent der in dem Propylenhomopolymer polymerisierten Vinylmonomere aus aromatischen Vinylmonomeren bestehen.

3. Pfropfpolymerisationsvorläufer nach Anspruch 1, wobei 50 oder mehr Gewichtsprozent der in dem Propylenhomopolymer polymerisierten Vinylmonomere aus Acryl- oder Methacrylestermonomeren oder Gemischen daraus bestehen.

4. Verfahren zum Herstellen eines Pfropfpolymerisationsvorläufers nach Anspruch 1, umfassend die folgenden Stufen:
Suspendieren von 100 Gewichtsteilen Propylenhomopolymer (A) in Wasser,
Zufügen, zu der erhaltenen Suspension, einer Lösung, erhalten durch Auflösen von 0,1 bis 10 Gewichtsteilen, bezogen auf 100 Gewichtsteile des Vinylmonomers (B), eines oder mehrerer radikalpolymerisierbaren, organischen Peroxide (C), dargestellt durch die allgemeine Formel (I) 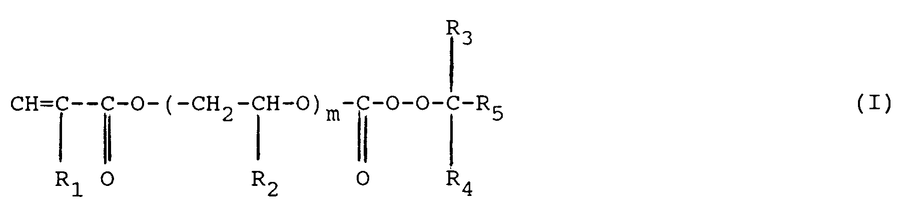 worin R₁ ein Wasserstoffatom oder eine C₁₋₂-Alkylgruppe darstellt, R₂ ein Wasserstoffatom oder eine Methylgruppe darstellt, R₃ und R₄ C₁₋₄-Alkylgruppen darstellen, R₅ eine Alkyl-, Phenyl- oder alkylsubstituierte Phenylgruppe, enthaltend 1 bis 12 Kohlenstoffatome, oder eine C₃₋₁₂-Cycloalkylgruppe darstellt, und m 1 oder 2 ist; oder dargestellt durch die allgemeine Formel (II) 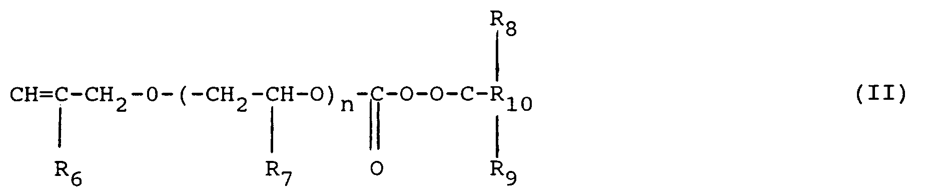 worin R₆ ein Wasserstoffatom oder eine C₁₋₄-Alkylgruppe darstellt, R₇ ein Wasserstoffatom oder eine Methylgruppe darstellt, R₈ und R₉
C₁₋₄-Alkylgruppen darstellen, R₁₀ eine Alkyl-, Phenyl- oder alkylsubstituierte Phenylgruppe, enthaltend 1 bis 12 Kohlenstoffatome, oder eine C₃₋₁₂-Cycloalkylgruppe darstellt, und n 0,1 oder 2 ist,
und eines Radikalpolymerisationsinitiators (D) mit einer Zersetzungstemperatur von 40 bis 90°C, um eine Halbwertsreduktionszeit von 10 Stunden zu erhalten, so daß er 0,01 bis 5 Gewichtsteile der Summe der Vinylmonomere (B) und des radikalpolymerisierbaren organischen Peroxids (C) ausmacht,
in 5 bis 400 Gewichtsteilen eines oder mehrerer Vinylmonomere (B), ausgewählt aus der Gruppe, bestehend aus aromatischen Vinylmonomeren, Acryl- oder Methacrylestermonomeren oder Gemischen daraus, Acrylonitril oder Methacrylonitril und Vinylestermonomeren,
Erwärmen des erhaltenen Gemisches auf weniger als die Zersetzungstemperatur des Initiators (D), bis das Propylenhomopolymer (A) mit mindestens 50 Gewichtsprozent der Vinylmonomere (B), des radikalpolymerisierbaren organischen Peroxids (C) und des Radikalpolymerisationsinitiators (D) imprägniert ist, und
Erhöhen der Temperatur der so erhaltenen wässrigen Suspension, um eine Copolymerisation der Vinylmomomere (B) und des radikalpolymerisierbaren organischen Peroxids (C) in dem Propylenhomopolymer (A) zu verursachen.

5. Verfahren nach Anspruch 4, wobei 50 oder mehr Gewichtsprozent der in dem Propylenhomopolymer zu polymerisierenden Vinylmonomere aus aromatischen Vinylmonomeren bestehen.

6. Verfahren nach Anspruch 4, wobei 50 oder mehr Gewichtsprozent der in dem Propylenhomopolymer zu polymerisierenden Vinylmonomere aus Acryl- oder Methacrylestermonomeren oder Gemischen daraus bestehen.

## Revendications

1. Précurseur de polymérisation par greffage, que l'on peut obtenir en copolymérisant, en présence de (D) un agent d'amorçage de polymérisation radicalaire ayant une température de décomposition de 40 à 90 °C, pour parvenir à une période de demi-réduction de 10 heures, dans
(A) 100 parties en poids d'un homopolymère du propylène,
(B) de 5 à 400 parties en poids d'un ou plusieurs monomères vinyliques choisis dans le groupe comprenant les monomères vinylaromatiques, les esters acryliques ou méthacryliques monomères ou leurs mélanges, l'acrylonitrile ou le méthacrylonitrile, et les esters vinyliques monomères, et
(C) un ou plusieurs peroxydes organiques polymérisables par polymérisation radicalaire, représentés par la formule générale (I) 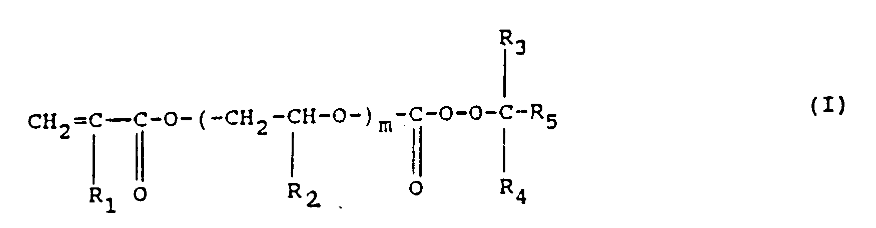 dans laquelle R₁ est un atome d'hydrogène ou un groupe alkyle en C₁₋₂, R₂ est un atome d'hydrogène ou un groupe méthyle, R₃ et R₄ sont des groupes alkyle en C₁₋₄, R₅ est un groupe alkyle, phényle ou phényle à substitution alkyle ayant de 1 à 12 atomes de carbone ou un groupe cycloalkyle en C₃₋₁₂, et m vaut 1 ou 2; ou représentés par la formule générale (II) 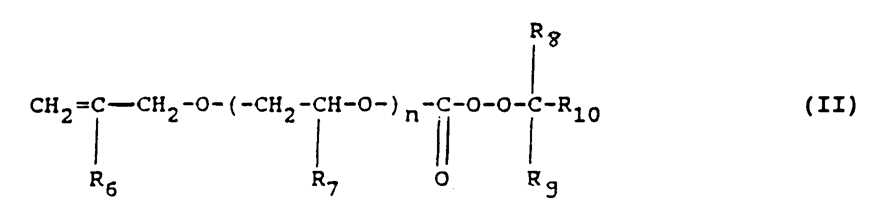 dans laquelle R₆ est un atome d'hydrogène ou un groupe alkyle en C₁₋₄, R₇ est un atome d'hydrogène ou un groupe méthyle, R₈ et R₉ sont des groupes alkyle en C₁₋ ₄, R₁₀ est un groupe alkyle, phényle ou phényle à substitution alkyle ayant de 1 à 12 atomes de carbone ou un groupe cycloalkyle en C₃₋₁₂, et n vaut 0, 1 ou 2, le composant (C) étant incorporé selon une quantité de 0,1 à 10 parties en poids pour 100 parties en poids du ou des monomères vinyliques (B), le composant (D) constituant de 0, 01 à 5 parties en poids par rapport à la somme desdits monomères vinyliques (B) et dudit peroxyde organique polymérisable par polymérisation radicalaire (C), et ledit précurseur de polymérisation par greffage contenant de 20 à 95 % en poids de l'homopolymère du propylène (A) et de 80 à 5 % en poids du copolymère monomère vinylique/peroxyde contenant de 0,01 à 0,73 % en poids d'oxygène actif.

2. Précurseur de polymérisation par greffage selon la revendication 1, dans lequel au moins 50 % en poids des monomères vinyliques polymérisés dans l'homopolymère du propylène sont constitués de monomères vinylaromatiques.

3. Précurseur de polymérisation par greffage selon la revendication 1, dans lequel au moins 50 % en poids des monomères vinyliques polymérisés dans l'homopolymère du propylène sont constitués d'esters acryliques ou méthacryliques monomères ou de leurs mélanges.

4. Procédé pour la fabrication d'un précurseur de polymérisation par greffage selon la revendication 1, qui comprend les étapes consistant :
à mettre en suspension 100 parties en poids d'un homopolymère du propylène (A) dans de l'eau,
à ajouter à la suspension obtenue une solution obtenue par dissolution, dans 5 à 400 parties en poids d'un ou plusieurs monomères vinyliques (B) choisis dans le groupe comprenant les monomères vinylaromatiques, les esters acryliques ou méthacryliques monomères ou leurs mélanges, l'acrylonitrile ou le méthacrylonitrile et des esters vinyliques monomères, de 0, 1 à 10 % en poids, par rapport à 100 parties en poids des monomères vinyliques (B), d'un ou plusieurs peroxydes organiques polymérisables par polymérisation radicalaire (C), représentés par la formule générale (I) 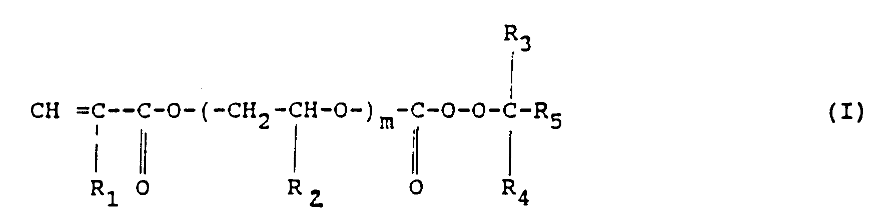 dans laquelle R₁ est un atome d'hydrogène ou un groupe alkyle en C₁₋₂, R₂ est un atome d'hydrogène ou un groupe méthyle, R₃ et R₄ sont des groupes alkyle en C₁₋₄, R₅ est un groupe alkyle, phényle ou phényle à substitution alkyle ayant de 1 à 12 atomes de carbone ou un groupe cycloalkyle en C₃₋₁₂, et m vaut 1 ou 2; ou représentés par la formule générale (II) 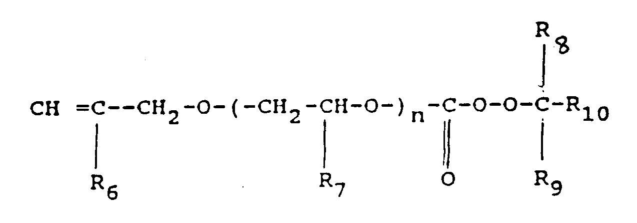 dans laquelle R₆ est un atome d'hydrogène ou un groupe alkyle en C₁₋₄, R₇ est un atome d'hydrogène ou un groupe méthyle, R₈ et R₉ sont des groupes alkyle en C₁₋ ₄, R₁₀ est un groupe alkyle, phényle ou phényle à substitution alkyle ayant de 1 à 12 atomes de carbone ou un groupe cycloalkyle en C₃₋₁₂, et n vaut 0, 1 ou 2, et un agent d'amorçage de polymérisation radicalaire (D) ayant une température de décomposition de 40 à 90 °C, pour parvenir à une période de demi-réduction de 10 heures, de façon qu'il constitue de 0,01 à 5 parties en poids de la somme desdits monomères vinyliques (B) et dudit peroxyde organique polymérisable par polymérisation radicalaire (C),
à chauffer le mélange obtenu à une température inférieure à la température de décomposition de l'agent d'amorçage (D) jusqu'à ce que l'homopolymère du propylène (A) soit imprégné d'au moins 50 % en poids desdits monomères vinyliques (B), dudit peroxyde organique polymérisable par polymérisation radicalaire (C) et dudit agent d'amorçage de polymérisation radicalaire (D), et
à élever la température de la suspension aqueuse ainsi obtenue de façon à provoquer la copolymérisation des monomères vinyliques (B) et dudit peroxyde organique polymérisable par polymérisation radicalaire (C) dans ledit homopolymère du propylène (A).

5. Procédé selon la revendication 4, dans lequel au moins 50 % en poids des monomères vinyliques à polymériser dans l'homopolymère du propylène sont constitués de monomères vinylaromatiques.

6. Procédé selon la revendication dans lequel au moins 50 % en poids des monomères vinyliques polymérisés dans ledit homopolymère du propylène sont constitués d'esters acryliques ou méthacryliques monomères ou de leurs mélanges.
